# EUROPEAN PATENT APPLICATION

(11) **EP 4 663 155 A1**
(43) Date of publication of application: **17.12.2025**
(21) Application number: 24708872.7
(22) Date of filing: 05.02.2024
(51) Int. Cl.: A61C 1/08, A61C 8/00

(54) **GUIDANCE SYSTEM FOR IMPLANT PLACEMENT**

(30) Priority: 07.02.2023 EP 23382107
(71) Applicant: Biotechnology Institute, I MAS D, S.L., 01005 Vitoria (ES)
(72) Inventor: ANITUA ALDECOA, Eduardo, 01005 VITORIA (ES)
(74) Representative: Cueto, Sénida
(86) International application number: PCT/ES2024/070064
(87) International publication number: WO 2024/165776

(57) **Abstract**

Guidance system (10) for the placement of dental implants and subsequent placement of crowns to replace the missing teeth (9) of a patient. The guidance system (10) comprises a tool (1) with a longitudinal body where a rotating drill (5) is coupled. The guidance system (10) is characterized in that it comprises at least one bushing (4) fixed to a head (2) of the tool (1) that surrounds the drill (5). The bushing (4) guides the engine that rotates the drill (5), which is located inside the bushing (4) allowing the guidance holes (12) of a guidance splint (11) to be more adjusted to the diameter outside of the bushing (4) than in known guidance splints because the rotating drill (5) is not in contact with the guidance splint (11). In this way, a more precise guidance system (10) is achieved.

## Description

### Technical field

The invention refers to a guidance system for carrying out maxillary surgery for the placement of dental implants.

### State of the art

Dental implants are a solution to replace or substitute missing or damaged teeth. A dental implant is an element that is inserted into the maxillary bone, on which a crown or prosthesis is subsequently placed imitating the appearance and functionality of the lost or damaged tooth.

Usually, placement of dental implants surgery in the patient's mouth is a manual process, where precision and path of the final position of the dental implant are strongly associated with the skill and experience of the dentist. When initially, the path to which a hole must be made in the maxillary bone must be studied and the dental implant is subsequently inserted. The hole in the maxillary bone is made using different types of drills that rotate by means of an engine and are directed by the expert hand of the dentist. However, a manual process can be inaccurate and dangerous in case of human factor failure. For this reason and to reduce the risk existing in manual surgery, there are auxiliary systems on the market for guiding the tools during surgery and for the placement of dental implants.

The best-known guidance systems are systems that through digital technologies, by means of 3D radiological images of the patient's teeth and jaws, and with the help of an intraoral scanner of the denture surface, the treatment and the position of an implant in an ideal position are virtually planned and calculated.. From the virtual planning, a guidance splint is generated with holes in the predefined directions in which the dental implant must enter. Thus, the guidance splint serves to guide the drilling in the proper direction, for the preparation of the bed that will house the implant in the bone, and the actual insertion of the implant.

As, for example, patent application US2015182298A1 describes a surgery kit based on a splint such as the above mentioned with holes made using digital technologies and a set of different drills that are guided through the holes in the splint until holes are made in the maxillary bones. However, since the drills used rotate at high speed to make the holes in the jaw bone, the guidance holes of the splint must have some clearance to allow this rotation, thus some precision is lost in the execution of the surgery. Not to mention that it is still somewhat of a manual procedure, so the dentist's pulse can jeopardize the surgery if losing control of the path of the drill and the drill damages the splint on contact during surgery.

Sometimes, to avoid the previously mentioned problems, additional pieces are placed over the holes of the splint to guide and control the depth to which the drill is inserted during the process of drilling the jaw bone to make the hole for the implant with greater precision, as mentioned in patent applications US2021353384A1, WO2017102646. Where the additional piece comprises at least two supports on the splint and a central hole with the respective diameter of the drill that is inserted through it. This way, the precision of the position of the axis of the hole improves, not depending so much on the pulse and skill of the dentist. However, the additional piece only allows one angle of operation of the drill according to the trajectory of the hole made in the additional piece and the splint, therefore, in these mentioned systems, degrees of freedom are lost during surgery.

Due to all of the above, the aim of the invention is a guidance system or tool during dental surgery that minimizes manual imprecision by the dentist and facilitates surgery, reducing risks for the patient.

### Brief description of the invention

It is an object of the invention a guidance system for the placement of at least one dental implant. The guidance system comprises a tool to which at least one rotating drill is attached. The guidance system comprises a set of bushings of at least one bushing attached to a head of the tool and surrounding the drill concentrically. The guidance system is provided with a guidance splint intended to be placed in a patient's mouth. The guidance splint comprises at least one guidance hole through which the bushing and the drill are inserted. The guidance system of the invention has the following particularities. The bushing is interchangeable with at least another bushing of the set of bushings of different length, depending on the stage of the surgery and the depth of the implant, and the guidance system additionally comprises an adapter member, between the head and the bushing, which comprises an upper end with a diameter adaptable to the head.

The tool comprises an engine that rotates a drill coupled to a head of the proximal end of the tool, where the bushing is also coupled. The drill is responsible for making a hole in the patient's maxillary bone to later insert the implant.

The head of the tool comprises a hollow body where the drill is attached to connect with the engine and make the hole in the maxillary bone. The head comprises at least one threaded interior surface where at least one joining end of an interchangeable bushing coupled to the interior surface of the hole in the head is connected. The bushing comprises a cylindrical and hollow body so that the drill remains inside and only protrudes from the bushing the length that is desired to drill the maxillary bone. For this reason, the bushing is exchanged for at least another bushing of a different length and/or thickness from the initial bushing, depending on the stage of the surgery and the depth of the hole required.

Thus, as the surgery progresses, the bushing is exchanged for a shorter one so that more length of the drill can be introduced into the maxillary hole, thus creating the necessary hole in the maxillary bone to place the dental implant. The fact that the bushing is attached to the head allows the head and the tool to move jointly, allowing a greater degree of freedom to make the hole.

Additionally, since the drill is rotating inside the bushing, contact during surgery occurs between an outer surface of the bushing and an inner surface of the hole of a guidance splint, which are static elements, so it is possible to achieve greater precision by not requiring clearance in the splint hole and less risk for the patient because the rotation of the drill is not in contact with the splint placed in the patient's maxilla.

For all of the above, a guidance system is achieved in dental implant surgery that improves the problems of currently known tools.

### Brief description of drawings

The details of the invention are shown in the following figures, which do not intend to limit the scope of the invention:
- Figure 1 shows an exploded perspective view of ta guidance system.
- Figure 2 shows a perspective view of the guidance system of Figure 1 with a single bushing.
- Figure 3 shows a perspective view of the assembled guidance system of Figure 2.
- Figure 4 shows an exploded perspective view of an embodiment of the guidance system of the invention.
- Figure 5 shows a perspective view of the guidance system of Figure 4.

### Detailed description of the invention

The invention relates to a guidance system (10) for performing the necessary surgery for the placement of dental implants and subsequent restoration of missing teeth on dental implants to replace a missing tooth (9) or a defective tooth. As is already known, all surgery for the placement of implants needs at least one guidance splint (11) on which the guidance system (10) of the invention will rest during surgery.

The guidance splint (11) includes guidance holes (12) in the dental arch where the patient's teeth (9) are missing. The guidance holes (12) are calculated according to the diameter of the implant to be used and with the help of digital technologies, using 3D radiological images of the patient's teeth and maxillary bone and intraoral scanners, to calculate the directions or trajectories in which the implants must be introduced, to later make the holes or beds that will house the corresponding implants in the patient's maxillary bone. Once the guidance holes (12) have been calculated and the guidance splint (11) has been generated, it is placed on the patient's maxilla, so that the guidance holes (12) show the dentist where to guide the guidance system (10) to perform implant placement surgery. As can be seen in the drawings, the guidance splint (11) comprises more than one guidance hole (12) which allows surgery and placement of several implants at the same time.

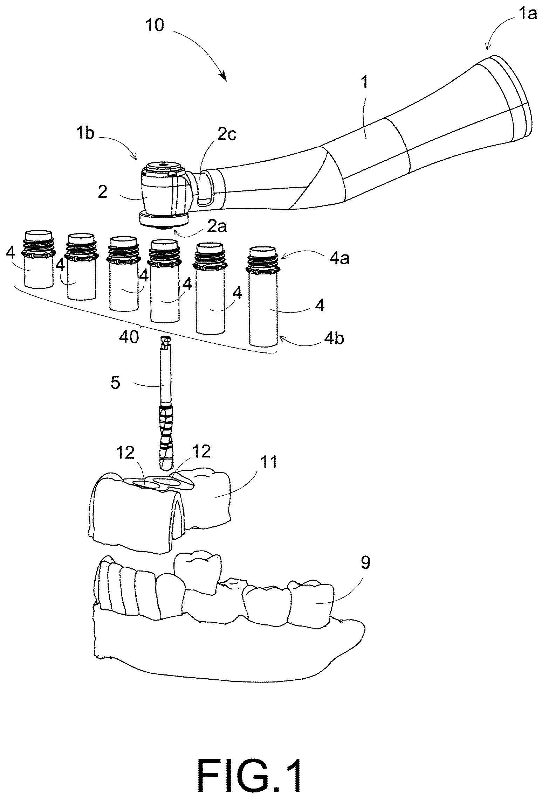

In Figures 1 to 3, a guidance system (10) is shown, comprising a tool (1) where at least one rotating drill (5) by means of an engine is coupled to make a maxillary foramen where the implant is inserted. As can be seen in the drawings, the guidance system (10) comprises at least one set of at least one bushing (4) fixed to a head (2) of the tool (1) and surrounding the drill (5) concentrically. The tool (1) comprises, a longitudinal body comprising a distal end (1a) through which the dentist controls the tool (1) and a proximal end (1b) with a hollow head (2) where a rotating drill (5) by means of an engine is fixed. The drill (5) is responsible of making a maxillary foramen in the maxillary bone of a patient, for the subsequent introduction of the dental implant that allows the final placement of the crown. The head (2) of the tool (1) comprises an inner surface (2a) where at least one bushing (4) of the assembly is coupled by means of a joining end (4a) of the bushing (4). The internal surface (2a) of the head (2) and the external joint (4a) of the bushing (4) are complementary. The bushing (4) also comprises a cylindrical and hollow body through which the drill (5) connected to the head (2) of the tool (1) is inserted and rotated and which protrudes from one end (4b) of the bushing (4) to make posterior contact with the maxillary bone.

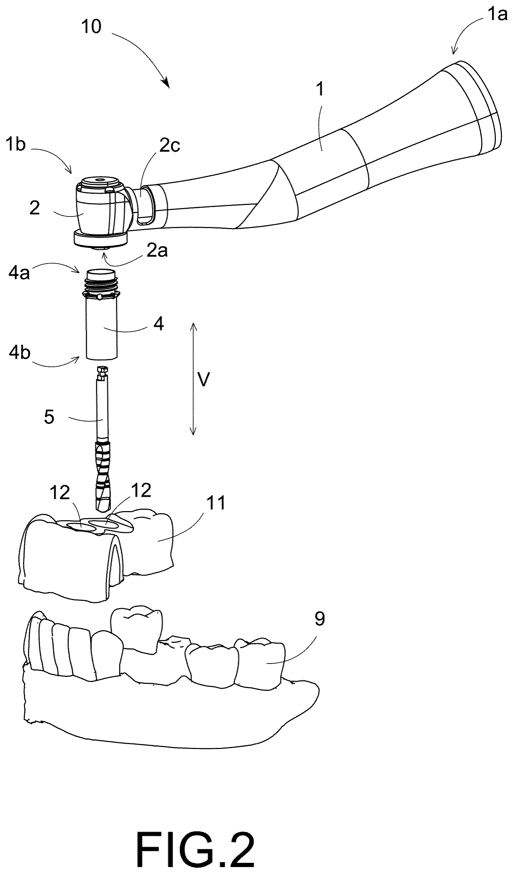

The embodiment of Figures 1 to 3 includes some of the essential features of the present invention. As can be seen in Figure 1, the guidance system (10) comprises a set of at least one bushing (4) interchangeable with at least another bushing (4) or several bushings (4). The set of bushings (40) have the same diameter depending on the implant to be placed in the patient's mouth and different lengths to be able to be exchanged depending on the stage of surgery and the depth of the maxillary foramen required. According to the drilling protocol, the drill (5) will also modify the length and thickness according to the dental implant to be placed. However, while the drill (5) can continue to rotate without contact with the internal surface of the bushing (4) and making the maxillary foramen, it will not be necessary to change the bushing (4) unless the depth of the maxillary foramen requires so. Therefore, depending on the stage of the surgery, as many bushings (4) will be required in the set of bushings (40), as required by the depth of the surgery or the implant to be placed, because the larger the contact surface with the guidance hole (12) of the guidance splint (11) will better guide the guidance system (10) of the invention. Additionally, in Figures 1 and 2 it can be seen that the joining end (4a) and the inner surface (2a) of the head (2) are threaded and complementary to each other.

Optionally, the guidance holes (12) comprise at least one metallic sleeve on the inner surface of the guidance hole (12) that allows the diameter of the hole (12) not to vary when the guidance splint (11) hardens. In addition to this shape, a more precise fit between the bushing and the internal surface of the guidance hole (12) is allowed.

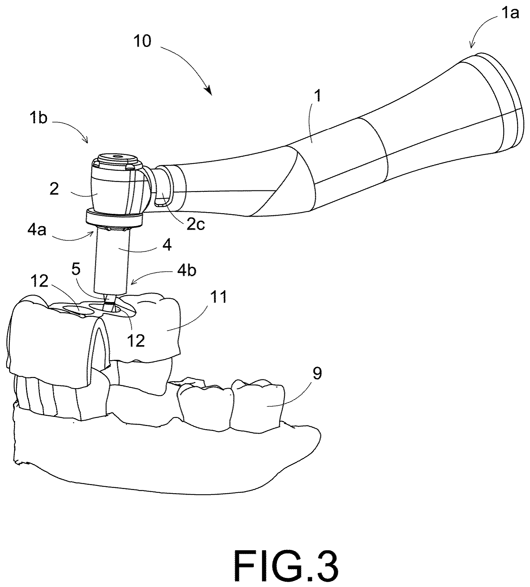

The exchange of bushings (4) is due to the fact that in order to make the maxillary foramen it is necessary that the length of the drill (5) that protrudes from the final end (4b) of the bushing (4) is variable depending on the moment of the dental implant placement surgery as shown in Figure 3. Given that as the surgery progresses it is necessary to change the drill (5), that is, both the diameter and the length of the drill (5) are changed, according to the drilling protocol, to go deeper into the maxillary bone until obtaining a sufficient depth and thickness of the maxillary foramen to insert the dental implant.

Thanks to the bushing (4) as an additional guidance element for the drill (5), it is possible to make the maxillary foramen with greater precision, i.e., the movement of the drill (5) is not in direct contact with the guidance splint (11), therefore, the guidance holes (12) of the splint (11) are tighter to the outer diameter of the bushing (4) than in known splints because they should not be calculated taking into account the clearance relative to the rotation of the drill (5). Therefore, a more precise guidance system (10) is achieved.

In addition, unlike other guidance systems, the bushing (4, 40) does not remain blocked in the guidance hole (12) of the guidance splint (11), that is to say that the bushing (4) does not block the rotation of the engine of the tool (1) with respect to the insertion axis of the implant allowing greater freedom of movement for the dentist.

Optionally, the guidance system (10) could be guided by at least two guidance splints (11) with different diameters of guidance holes (12) to guide the set of bushings (40) and drills (5) of the guidance system. (10).

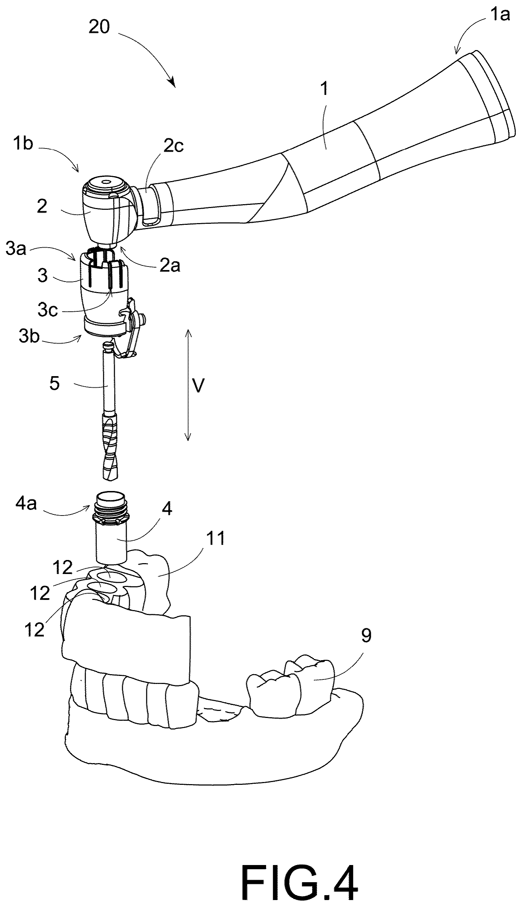

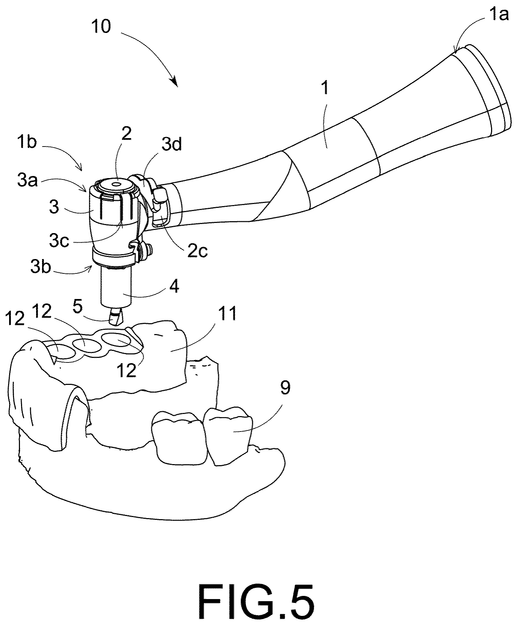

In the preferred embodiment of the invention shown in Figures 4 and 5, the guidance system (20) comprises an adapter member (3) between the head (2) and the bushing (4). The adapter member (3) is necessary when the joining end (4a) of the bushing (4) is not complementary to the inner surface (2a) of the head (2). In this case, an adapter member (3) is necessary to allow fixing the bushing (4) to the tool (1). The adapter member (3) comprises a hollow cylindrical body with an upper end (3a) of adaptable diameter by means of longitudinal slots (3c), which are located around the surface of the adapter body (3), from the upper end (3a) towards a lower end (3b). Thus, they allow the diameter of the upper end (3a) to increase or decrease when introducing the head (2) inside the adapter member (3) through a combination of movements, such as the introduction in a vertical direction (V) and a turn at the end so that the adapter member (3) engages in the tool (1) when it reaches the correct position. This way, the upper end (3a), thanks to the groove (3c) is adaptable to the diameter of the head (2) and since the slots (3c) tend to return to an initial position of smaller diameter, they press the head (2) fixing the adapter member (3) to the tool (1). In addition, since the adapter member (3) has the aim of coupling at least one bushing (4) in the tool (1), the adapter member (3) comprises a lower end (3b) complementary to the joining end (4a) of the bushing (4). Optionally, the adapter member (3) comprises a protruding arc-shaped hook (3d), which extends from the upper end (3a) to embrace the longitudinal body of the tool (1) and block the sliding of the adapter member (3) by the head (2) in a vertical direction (V) as seen in Figure 5.

As previously mentioned, in the preferred embodiment of Figures 4 and 5, the bushing (4) comprises a joining end (4a) complementary to the lower end (3b) of the adapter member (3), where the union is preferably threaded.

Due to all of the above, the invention achieves an improved and comfortable guidance system (10), with greater precision in the creation of the maxillary foramen for the placement of dental implants by means of the tool (1) and the use of at least one bushing (4). In addition, the dentist can use the tool (1) with one hand, since all the additional auxiliary members are attached to the tool (1).

The invention also relates to the procedure for preparing and using the guidance system (10) of the invention during implant placement surgery. Initially, it is necessary to perform a dental examination when the placement of a dental implant is required, so dental x-rays and 3D images are performed to obtain models of the patient's teeth (9) and jaw. In such a way that on these models it is possible to calculate the trajectories at which to make the maxillary foramens by means of the tool (1) of the guidance system (10) of the invention.

Once the trajectories have been calculated, the guidance splint (11) is printed using 3D technology with the guidance holes (12) calculated to help the guidance system (10) of the invention during the drilling procedure. Therefore, the next step is to place the splint (11) in the patient's mouth to start the process of making the maxillary foramens.

Once the guidance splint (11) is in place, the procedure for preparing and using the guidance system (10) is characterized by the fact that at least one bushing (4) of the set of bushings (40) of the guidance system (10) is coupled, in a head (2) of the tool (1) to which a rotating drill (5) is fixed, which is inserted concentrically through the bushing (4) to make the maxillary foramen.

Once the drill (5) and the bushing (4) are fixed to the engine and head (2) respectively, the holes are made in the bone where the dental implant will be placed. To do this, according to the drilling protocol and the procedure of the invention, one must start with the shorter and narrower drill (5) together with the longer bushing (4), that is, the drill (5) and bushing (4) set where the drill (5) protrudes the least so that the first maxillary foramen is as precise as possible. Subsequently, the thicknesses and lengths of the drill (5) must be increased and the lengths of the bushings (4) interchanged, so that a conical hole is generated such as the geometry of dental implants. Summarizing, once the dental implant and the set of bushings (40) to be used during surgery have been chosen, the first drill (5) is fixed and the longest bushing (4) is placed around the drill (5) concentrically, allowing the drill (5) to protrude from the bottom (4b) of the bushing (4), the minimum length necessary for an accurate first maxillary foramen. Thus, once the bushing (4) is in placed, it is inserted into the guidance hole (12) of the guidance splint (11) to make the first hole with the greatest possible contact between the bushing (4) and splint (11) for better guidance. Next, the drill (5) must be changed for the next one according to the drilling protocol and so on until the maxillary foramen is finished and the dental implant can be inserted.

Optionally, when the thickness of the drill (5) increases and/or a greater or less protruding length of the drill (5) is required, the procedure requires a change of bushing (4). Therefore, it is exchanged for another bushing (4) of the set of bushings (40) to continue allowing the drill (5) to rotate inside concentrically and allowing the contact length of the bushing (4) and the guidance hole (12) remains as large as possible. Thus, achieving a more precise guidance procedure.

Once the maxillary foramen has been made, the metallic bolt of the implant is inserted into the jaw, to later place a prosthetic restoration on it, such as a crown, a bridge or other elements to replace the affected tooth (9).

## Claims

1. Guidance system (10) for the placement of at least one dental implant comprising a tool (1) to which at least one rotating drill (5) is attached, wherein the guidance system (10) comprises a set of bushings (40) of at least one bushing (4) attached to a head (2) of the tool (1) and surrounding the drill (5) concentrically, being the guidance system (10) provided with a guidance splint (11) intended to be placed in a patient's mouth, wherein the guidance splint (11) comprises at least one guidance hole (12) through which the bushing (4) and the drill (5) are inserted, **characterized in that**
the bushing (4) is interchangeable with at least another bushing (4) of the set of bushings (40) of different length, and
the guidance system (10) additionally comprises an adapter member (3), between the head (2) and the bushing (4), which comprises an upper end (3a) with a diameter adaptable to the head (2).

2. Guidance system (10) according to claim 1, wherein the bushing (4) comprises a hollow cylindrical body through which the drill (5) is inserted.

3. Guidance system (10), according to claim 1, wherein adapter member (3) is adapted to the head (2) by means of slots (3c) longitudinal from the upper end (3a) to a lower end (3b) and where the head (2) is inserted, remaining inside the adapter member (3) and where the lower end (3b) engages a joining end (4a) from the bushing (4).

4. Guidance system (10) according to claim 6, wherein the adapter member (3) comprises a protruding hook (3d) in the shape of an arc to embrace the longitudinal body of the tool (1).

5. Guidance system (10) according to claim 6, wherein the bushing (4) comprises a threaded joining end (4a) complementary to the lower end (3b) of the adapter member (3).

6. Guidance system (10) according to claim 9, wherein the guidance holes (12) of the guidance splint (11) comprise at least one metal jacket on the inner surface of the guidance hole (12).
